Europäisches Patentamt

European Patent Office

Office européen des brevets

(11) Veröffentlichungsnummer: **0 213 118**
**A2**

(12) ## EUROPÄISCHE PATENTANMELDUNG

(21) Anmeldenummer: 86890237.0

(22) Anmeldetag: 21.08.86

(51) Int. Cl.4: **G06F 12/14**

(30) Priorität: 22.08.85 AT 2453/85

(43) Veröffentlichungstag der Anmeldung:
04.03.87 Patentblatt 87/10

(84) Benannte Vertragsstaaten:
**BE CH DE FR GB LI NL**

(71) Anmelder: **NOVOMATIC
Automatenhandelsgesellschaft m.b.H. & Co.
KG
Wiener Strasse 158
A-2352 Gumpoldskirchen(AT)**

(72) Erfinder: **Schöbitz, Edmund
Gainfarnerstrasse 1
A-2542 Kottingbrunn(AT)**

(74) Vertreter: **Collin, Hans, Dipl.-Ing. Dr. et al
Patentanwälte Dipl.-Ing. Dr. Hans Collin
Dipl.-Ing. Erwin Buresch Dipl.-Ing. Dr. Helmut
Wildhack Dipl.-Ing. Armin Häupl Mariahilfer
Strasse 50
A-1070 Wien(AT)**

(54) **Verfahren und Anordnung zum Schutz von Software.**

(57) Die Erfindung betrifft ein Verfahren zum Schutz von in einem Speicher abgelegter Software gegen unbefugtes Kopieren, wobei die Befehle und/oder Daten einem Mikroprozessor auf Abfrage zugeleitet werden und hiebei umkodiert bzw. ungewandelt werden. Zur Erschwerung des Kopierens ist erfindungsgemäß vorgesehen, daß die Art der Umkodierung von zumindest einem abgefragten Befehls-und/oder Datenbyte in Abhängigkeit von zumindest einem vorangehend abgefragten Befehls-und/oder Datenbyte abgeändert wird.

Eine Anordnung zum Schutz von in zumindest einem Befehls-und/oder Datenspeicher abgelegter Software ist erfindungsgemäß dadurch gekennzeichnet, daß die Umkodierungsfunktion des Umkodierers für zumindest ein zumindest einem eingetroffenen, in vorgesehener Art umkodierten, Befehls-und/oder Datenbyte nachfolgendes Befehls-und/oder Datenbyte abänderbar ist.

Fig. 3

## Verfahren und Anordnung zum Schutz von Software

Die Erfindung betrifft ein Verfahren zum Schutz von in zumindest einem Befehls-und/oder Datenspeicher abgelegter Software gegen unbefugtes Kopieren, wobei die Befehle und/oder Daten einem Mikroprozessor auf Abfrage zugeleitet werden und hiebei umkodiert werden, wobei zumindest ein Teil der dem(n) Speicher(n) entnommenen Befehle und/oder Daten, vorzugsweise alle Befehle, durch vorgegebene neue Befehle und/oder Daten ersetzt bzw. in diese umgewandelt werden, die sodann als neue gültige Befehle und/oder Daten dem Mikroprozessor zugeführt werden, sowie eine Anordnung zum Schutz von in zumindest einem Befehls- und/oder Datenspeicher abgelegter Software gegen unbefugtes Kopieren, wobei die Befehle und/oder Daten einem Mikroprozessor auf Abfrage über einen gegebenenfalls mit diesem hybridisierten bzw. vergossenen Umkodierer zur Verarbeitung zugeleitet sind und wobei im Umkodierer zumindest ein Teil der dem(n) Speicher(n) entnommenen Befehle und/oder Daten, vorzugsweise alle Befehle, durch vorgegebene neue Befehle und/oder Daten ersetzt bzw. in diese umgewandelt werden, die sodann als neue, gültige Befehle und/oder Daten dem Mikroprozessor zugeführt sind, insbesondere zur Durchführung des oben genannten Verfahrens.

Im folgenden werden bekannte Anordnungen zum Schutz von Software erläutert:

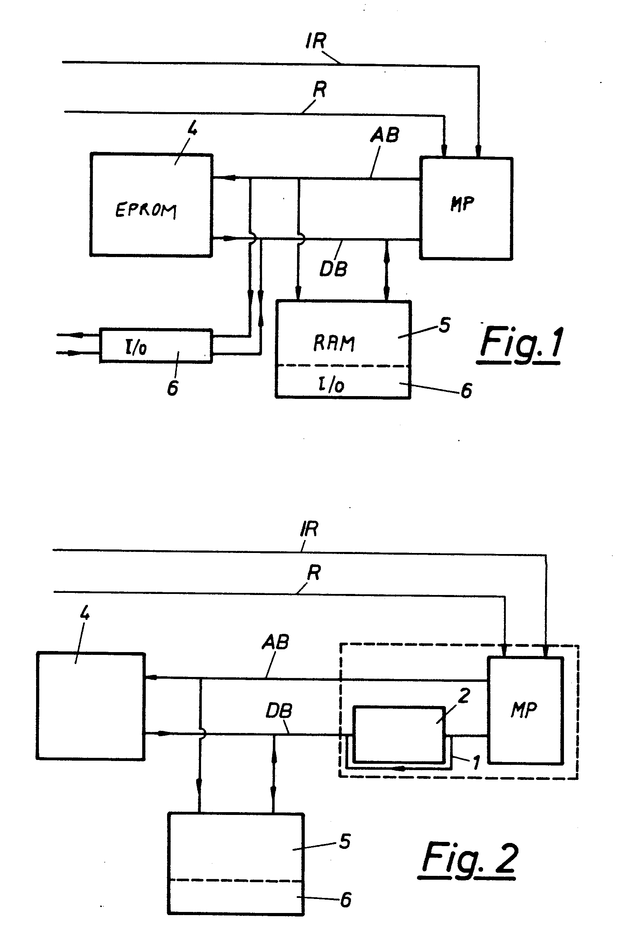

Die Funktion von Mikroprozessorsystemen nach Fig. 1 ist im Prinzip folgende:

Durch ein Signal auf der Reset-Leitung R wird ein Mikroprozessor MP in einen definierten Anfangszustand gesetzt. Er beginnt daraufhin mit der Abarbeitung des in einem Speicher 4,5 abgelegten Programmes an einer ganz bestimmten, vom Hersteller festgelegten Adresse. Ein handelsüblicher MP Z80 beispielsweise beginnt immer bei der Adresse 0000. Das Programm steht nicht im Klartext in den Speichern 4,5, sondern in Form von Zahlen bestimmter Bedeutung, d.h. es ist jedem für den Mikroprozessor definierten Befehl eine Zahl bzw. Zahlenfolge zugeordnet. Welche Befehle definiert sind und wie die zugehörige Zahl lautet, ist für alle Mikroprozessoren gleichen Typs gleich und dem vom Hersteller herausgegebenen Datenblatt zu entnehmen.

Programme können dabei in Lesespeichern 4 - (ROM, PROM, EPROM ,....) und/oder in Schreib-/Lesespeichern 5 (RAM) abgelegt sein, wogegen der Mikroprozessor nur in Schreib-/Lesespeichern 5 Daten ablegen kann. Die Eingabe und Ausgabe der verarbeiteten Daten erfolgt über den Eingabe-Ausgabe-Block 6.

Der Mikroprozessor legt also die Adresse 0000 auf den Adressbus AB. Mit dieser Adresse wird ein bestimmtes Byte in einem bestimmten Speicherbaustein angesprochen, das über den Datenbus DB zum Mikroprozessor übertragen wird. Im Programmbeispiel hat dieses Byte auf Adresse 0000 den Wert 3E (Alle Adressen und Daten bzw. Befehle werden hier nicht im Dezimal-sondern im Hexadezimalsystem dargestellt; z.B. entspricht Hexadezimal 3E der Dezimalzahl 62). Die Zahl 3E bedeutet für den Z80-MP "LD A,.." (Lade das Register A mit dem unter der unmittelbar folgenden Adresse abgelegten Byte). Der Mikroprozessor muß also zur vollständigen Ausführung des Befehls noch die Adresse 0001 auf den Adressbus (AB) legen und das über den Datenbus übertragene Byte in das Register A laden. In unserem Beispiel hat dieses nachfolgende Byte den Wert 10, d.h., der vollständige Befehl lautet "LDA,10" bzw. "3E 10".

Nun ist die Ausführung des ersten Befehls abgeschlossen und es folgt der zweite Befehl.

Dieser wird von der nächstfolgenden Adresse geladen, da der Mikroprozessor das Programm Schritt für Schritt durchführt, wobei die nacheinander durchzuführenden Befehle in aufeinanderfolgenden Speicherplätzen abgelegt sind.

Der Mikroprozessor legt also die Adresse 0002 auf den Adressbus. Über den Datenbus DB erhält er das Byte 47, welches für den Z80 "LDB, A"(Lade den Inhalt des Registers A in das Register B) bedeutet. Nach Durchführung dieses Befehls wird die nächste Adresse, 0003, auf den Adressbus gelegt und der Befehl, in unserem Beispiel 47 ("LD B,A"), durchgeführt.

Die Programmdurchführung muß nicht immer aus aufeinanderfolgenden Speicherzellen erfolgen. Es gibt da Ausnahmen, die sich im wesentlichen auf zwei reduzieren lassen:

Die erste Ausnahme sind sogenannte Sprünge (bedingt, unbedingt, Unterprogrammaufruf, Unterprogrammrücksprung). So kann im Programm der Kode C3 auftreten, der für den Z80 "JMP ..." - (Fahre mit der Programmabarbeitung an der durch die beiden folgenden Bytes adressierten Stelle fort; jump to adress...) bedeutet. Steht also z.B. der Kode C3 12 34 im Speicher, so heißt das "JMP 3412" (es wird erst die niederwertige und dann die höherwertige Adresshälfte übertragen), also springe mit der Programmausführung zur Adresse 3412.

Die zweite Ausnahme sind sogenannte Interrupts. So gibt es bei fast jedem Mikroprozessor die Möglichkeit, wenigstens ein Programm über einen Interrupt ausführen zu lassen. Ein Interrupt ist ein Hardware-Signal, welches den Mikroprozessor dazu veranlaßt, die Ausführung des momentanen Programms sofort zu unterbrechen und ein vom Mikroprozessor-Anwender geschriebenes, an einer vom Mikroprozessor-Hersteller festgelegten Adresse im Programmspeicher abgelegtes Programm - ("Interruptroutine") durchzuführen, wobei es wesentlich ist, daß sich der Mikroprozessor die Stelle der Unterbrechung merkt und nach Beendigung des Interruptprogrammes mit der Ausführung eben dort fortfährt. Der Sinn einer solchen Möglichkeit ist die schnelle Reaktion auf externe Ereignisse oder Synchronisation mit externen Ereignissen.

Vergleichbar ist der Mikroprozessor mit Interruptmöglichkeit mit einem Menschen der arbeitet (Programm) und sobald das Telefon läutet, seine Arbeit unterbricht, den Hörer abhebt, spricht,... - schließlich den Hörer wieder auflegt (Ende des Interruptprogramms), um die Arbeit an der Unterbrechungsstelle wieder aufzunehmen. Ein Mensch ohne Interruptmöglichkeit müßte immer wieder nachschauen, ob das Telefon läutet, was zwei Folgen haben kann: Entweder der Anrufer muß lange warten, bis der Mensch wieder einmal nachschaut, oder der Mensch muß so oft nachschauen, daß seine Arbeit wesentlich langsamer vonstatten geht. Beim vorliegenden Mikroprozessor (Z80) löst eine Art von Interrupt einen Sprung zur Speicherzelle 0066 aus, die Unterbrechungsadresse - (Rücksprung-) wird im Schreib-/Lesespeicher - (RAM) für den späteren Rücksprung ins Hauptprogramm abgelegt.

Es sind zu der Schaltung in Fig. 1 am Ende der Beschreibung zwei Programmbeispiele angegeben, die keine sinnvollen Programme darstellen, sondern nur den Daten-, Befehls-und Adressfluß darstellen sollen. Das zweite Programmbeispiel könnte statt dem ersten im Speicher stehen und unterscheidet sich nur durch einen Befehl (6F) (= ein Byte) vom ersten Beispiel.

Die Schaltung nach Fig. 1 ist nun verständlich. Dabei sind der Mikroprozessor und die Speicherbauelemente Standardbausteine, die jeder kaufen kann. Die Befehlskodes und deren Bedeutung sind bekannt und im Datenblatt des jeweiligen Mikroprozessors nachzulesen. Aus diesem Grund ist die Software von jedem kopierbar, insbesondere wenn bestehende Geräte mit neuer Software ausgerüstet werden sollen: man beschafft sich einen Speicher - (EPROM) mit neuer Software und kopiert sie mit einem handelsüblichen Programmiergerät in weitere EPROMS, die dann nur noch in die anderen Geräte gesteckt zu werden brauchen.

Der Schaden für den Software-Erzeuger ist beträchtlich.

Es ist aus diesem Grund wünschenswert, die Software so zu verschlüsseln, daß sie nicht mehr auf einem Standard-Mikroprozessor lauffähig ist.

Zu diesem Zweck werden die Befehlskodes vor der Programmierung des EPROMS verschlüsselt, d.h. es wird jedem Befehlskode ein bestimmter anderer Kode zugeordnet. Während des Programmablaufes wird dann jeder Kode wieder entschlüsselt, wobei der dazu notwendige Umkodierer 2 vorzugsweise mit dem Mikroprozessor hybridisiert ist, da er sonst leicht analysierbar ist und nachgebaut werden kann (Fig. 2).

Der Software-Erzeuger verkauft nun nicht nur den Speicher mit dem Programm sondern zusätzlich den Mikroprozessor mit Umkodierer 2.

Der Programmablauf ist wie folgt, wobei das selbe Programm durchgeführt werden soll wie bei der Schaltung nach Fig. 1.

Nach dem Reset über R legt der Mikroprozessor die Adresse 0000 auf den Adressbus, über den Datenbus kommt ein verschlüsseltes Byte, in vorliegendem Fall 57, zum Umkodierer 2. Dieser wandelt -nach einem bestimmten Algorithmus -den Wert 57 in 3E um. Das Byte 3E wiederum gelangt jetzt zum Mikroprozessor, der es wie vorher als "LD A,.." interpretiert und ausführt. Zu diesem Zweck legt er die Adresse 0001 auf den Adressbus, das Byte 10 wird übertragen und kommt unverändert in den Mikroprozessor (Daten werden im vorliegenden Fall nicht verschlüsselt, da dies die Wirksamkeit der Verschlüsselung erhöht). Als nächstes wird die Adresse 0002 auf den Adressbus gelegt. Das Byte 33 kommt zum Umkodierer 2, wird dort in 47 umgewandelt und gelangt so zum Mikroprozessor. Anschließend wird von Adresse 0003 der nächste Befehl in gleicher Weise gelesen, entschlüsselt und ausgeführt, usw.

Daten, die in den Schreib-/Lesespeicher oder zur Ausgabe gelangen sollen, werden um den Umkodierer 2 herumgeführt (Datenbus 1) und unverschlüsselt abgelegt.

Der Interrupt IR und das Reset-Signal R funktionieren wie in der Schaltung gemäß Fig. 1.

Das zweite Programmbeispiel läuft wie das erste ab (es könnte an seiner Stelle im Speicher stehen), nur ein Befehl ist anders, nämlich auf Adresse 0004 steht das Byte 72, welches vom Umkodierer 2 in 6F umgewandelt wird, was wiederum der Mikroprozessor als "LD L,A" (Lade Inhalt von Register A in Register L) versteht.

Der Schutz durch Methoden dieser Art ist um so besser, je schwieriger es ist, die Art der Kodierung zu analysieren und den Umkodierer nachzubilden.

Die oben genannte Methode ist mit einfachen Mitteln relativ leicht zu entschlüsseln, da sich jeder Mikroprozessor durch seine Hardware-Reaktion selbst verrät. So ist es durchaus möglich, einen verschlüsselten Z80-Mikroprozessor innerhalb von 30 Stunden zu analysieren und nachzubilden.

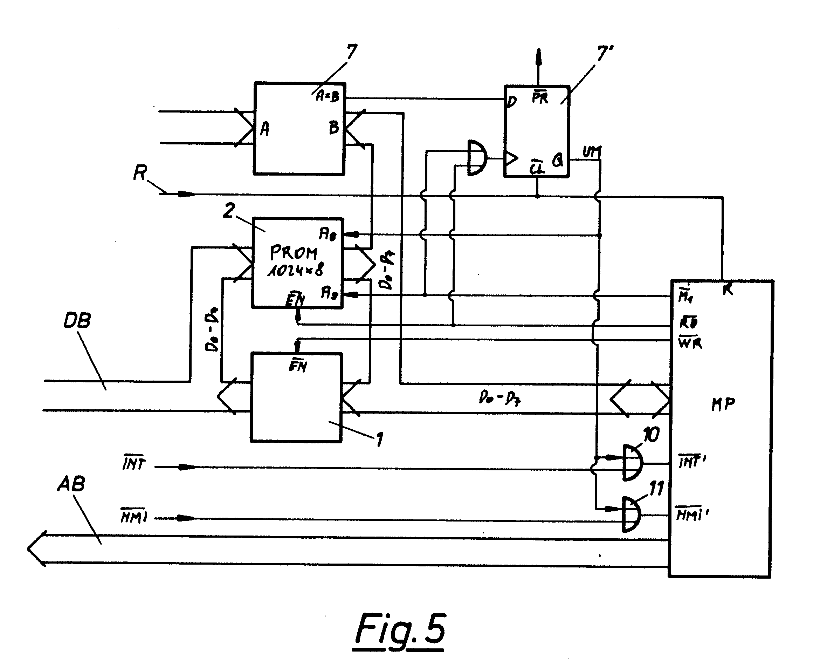

Eine Verbesserung des Schutzes bietet die Methode nach Fig. 3. In dieser Schaltung enthält der Umkodierer 2 mehrere (im vorliegenden Beispiel drei) Umkodierer gemäß Fig. 2, wobei diese Umkodierer bestimmten Adressen zugeordnet sind. Es erfolgt also die Umkodierung nicht nur in Abhängigkeit vom Byte, das an einer bestimmten Stelle gefunden wird sondern auch von der Adresse, auf die zugegriffen wird, selbst. Im Programmbeispiel sind drei Umkodierer-"Seiten" bzw. "Listen" vorhanden, die den verschiedenen Speicherplätzen bzw. Adressen wie folgt zugeordnet sind:

Seite 1 0000 0004 0008 000C 0010 0014 0018 ....

Seite 2 0001 0005 0009 000D 0011 0015 0019 ....

Seite 3 0002 0006 000A 000E 0012 0016 001A ....

Seite 2 0003 0007 000B 000F 0013 0017 001B ....

Wenn man also die Adressen der Reihe nach durchgeht, sind die zugehörigen Seiten 1,2,3,2, 1,2,3,2, 1,2,3,2, ....

Reset-Leitung R und Interrupt IR funktionieren wie zuvor beschrieben.

Nach dem Reset legt der Mikroprozessor die Adresse 0000 auf den Adressbus; aus dem Programmspeicher wird über den Datenbus DB der Wert 57 übertragen, welcher vom Umkodierer 2 - (ADR.0000 >>> Seite 1) in 3E umgewandelt wird, welcher über einen zusätzlichen Bus 9 mit entsprechenden Informationen versorgt wird, was wiederum vom Z80 richtig als "LD A, .." ausgeführt wird. Zu diesem Zweck wird wieder die Adresse 0001 auf den Adressbus gelegt und das Byte 10 gelangt unverändert zum Mikroprozessor. Nun wird die Adresse 0002 ( >>> Seite 3) auf den Adressbus gelegt, das Byte 33 wird gelesen und in 47 umkodiert, was der Mikroprozessor als "LD B,A" erkennt. Als nächstes folgt die Adresse 0003 ( >>> Seite 2), von der das Byte 12 gelesen wird, dieses wird umkodiert in 47; der Mikroprozessor erhält also wieder den Befehl "LD B,A". Es wird also auf Adr. 0002 das Byte 33 in 47 umgedreht, während auf Adr. 0003 das Byte 12 in 47 umgewandelt wird, aber wobei ein Byte 12, das auf Adr. 0002 aufscheinen würde, eine ganz andere Umwandlung erfahren hätte.

Damit ist erreicht, daß man aus der Kenntnis der Verschlüsselung von 47 ("LD B,A") auf Adresse 0002 noch nicht auf die Verschlüsselung von 47 auf Adresse 0003 schließen kann, was es einem Uneingeweihten erschwert, Programme "auszuhorchen", abzuändern oder selbst zu - schreiben.

Der Nachteil ist, daß bei stark steigendem Aufwand des Umkodierers der Analyse-Aufwand relativ wenig steigt.

Auch in dieser Schaltung werden die Daten zu RAM4 und Ausgabe 6 mit dem Datenbus 1 um den Umkodierer herumgeführt.

Die beiden zuvor anhand Fig. 2 und 3 beschriebenen Schutzmethoden sind bekannt.

Einige neue Methoden, die wesentlich - schwieriger zu analysieren sind, sollen nun beschrieben werden. Diesen Methoden ist allen gemeinsam, daß die Funktion des Umkodierers nicht bzw. nicht nur von der Adresse und/oder dem übertragenen Byte abhängt, sondern auch von einem oder mehreren vorher ausgeführten Befehlen. Das bedeutet, daß es nicht genügt, ein Byte isoliert an einer bestimmten Stelle zu betrachten, sondern man muß -um ein Programm oder einen Mikroprozessor analysieren zu können -wissen, wie der Programmablauf davor erfolgt ist; der Umkodierer braucht also eine Art Gedächtnis für seine richtige Funktion.

Erfindungsgemäß ist ein Verfahren der eingangs genannten Art dadurch gekennzeichnet, daß die Art der Umkodierung von zumindest einem abgefragten Befehls-und/oder Datenbyte in Abhängigkeit von zumindest einem vorangehend abgefragten Befehls-und/oder Datenbyte abgeändert wird. Bei einer Anordnung der eingangs genannten Art ist erfindungsgemäß vorgesehen, daß die Umkodierungsfunktion des Umkodierers für zumindest ein, zumindest einem eingetroffenen, in vorgesehener Art umkodierten Befehls-und/oder Datenbyte nachfolgendes Befehls-und/oder Datenbyte abänderbar ist. Bei einer bevorzugten Ausführungsform der Anordnung ist vorgesehen, daß der Umkodierer einen Erkennungs-bzw. Umwandlungsschaltung für die einlangenden Befehle und/oder Daten aufweist, mit der der Umkodierer bei Übereinstimmung zumindest eines eingelangten Befehls-und/oder Datenbytes mit zumindest einem in der Erkennungsschaltung enthaltenen vorgegebenen Befehlsund/oder Datenbyte zur Abänderung der Umkodierung einer bestimmten Anzahl nachfolgend einlangender Befehle und/oder Daten, z.B. Ersetzen der Befehle und/oder Daten durch andere Befehls-und/oder Datenbytes, umschaltbar ist, z.B. durch Änderung des Zugriffes auf einen anderen dem Umkodierer zugeordneten bzw. in ihm enthaltenen Befehls-und /oder Datenspeicher, durch Umformen, z.B. Summieren, der einlangenden Befehle und/oder Daten in vorbestimmter Weise od.dgl. oder daß eine Verknüpfungseinrichtung zur direkten Verknüpfung von eingelangten Befehls-und/oder Datenbytes mit einlangenden Befehls-und/oder Datenbytes zur Abänderung der eingelangten Befehls-und/oder Datenbytes, z.B. durch bit-oder byteweise Addition, Subtraktion, Exclusiv-ODER-Verknüpfung, od.dgl., vorgesehen ist.

Im folgenden wird die Erfindung anhand der Fig. 4 bis 7 näher erläutert. Es zeigen Fig. 4, 5 eine erste Schaltung zur Abänderung der Kodierung, Fig. 6 eine zweite Schaltung zur Abänderung der Kodierung und Fig. 7 schematisch eine Anordnung zur Verknüpfung eintreffender Signale zur Abänderung ihrer Kodierung.

Im einfachsten Fall einer solchen Umkodierung mit Gedächtnis schaltet ein bestimmtes Byte, das den Mikroprozessor erreicht, den Umkodierer 2 für den nächstfolgenden Befehl um. Dies soll anhand von Fig. 4 und den schon bekannten Programmbeispielen erläutert werden.

### Beispiel 1

| Adresse | Daten 1 | Daten 2 | UM | Befehl |
|---------|---------|---------|-----|---------|
| 0000 | 57 | 3E | | LD A, |
| | | | 0 | |
| 0001 | 10 | 10 | | 10 |
| | | | 0 | |
| 0002 | 33 | 47 | | LD B,A |
| | | | 0 | |
| 0003 | 33 | 47 | | LD B,A |
| | | | 0 | |
| 0004 | 33 | 47. | | LD B,A |
| | | | 0 | |
| 0005 | 33 | 47 | | LD B,A |
| | | | 0 | |
| 0006 | 33 | 47 | | LD B,A |
| | | | 0 | |
| 0007 | 33 | 47 | | LD B,A |
| | | | 0 | |
| " | " | " | " | " |
| " | " | " | " | " |
| " | " | " | " | " |

## Beispiel 2

| Adresse | Daten 1 | Daten 2 | UM | Befehl | |
|---------|---------|---------|----|--------|---|
| 0000 | 57 | 3E | | LD A, | |
| | | | 0 | | |
| 0001 | 10 | 10 | | 10 | |
| | | | 0 | | |
| 0002 | 33 | 47 | | LD B,A | |
| | | | 0 | | |
| 0003 | 33 | 47 | | LD B,A | |
| | | | 0 | | |
| 0004 | 72 | 6F | | LD L,A | *1* |
| | | | 1 | | |
| 0005 | 57 | 47 | | LD B,A | *2* |
| | | | 0 | | |
| 0006 | 33 | 47 | | LD B,A | |
| | | | 0 | | |
| 0007 | 33 | 47 | | LD B,A | |
| | | | 0 | | |
| " | " | " | " | " | |
| " | " | " | " | " | |
| " | " | " | " | " | |

Das Beispiel 1 der Fig. 4 läuft wie Beispiel 1 der Fig. 2 ab, mit der zusätzlichen Erzeugung des Signals "UM", einer Erkennungsschaltung 7, das jedoch hier keine Bedeutung hat.

Auch das Beispiel 2 ist anfangs gleich, jedoch tritt in Programmzeile 0004 das Byte 6F auf, das von der Erkennungsschaltung 7 erkannt wird und daraufhin ein, der Erkennungsschaltung 7 zugeordnetes bzw. darin enthaltenes Flip-Flop od.dgl. umschaltet, womit auch die Leitung "UM" auf 1 wechselt. Der Umkodierer 2 besteht aus zwei Umkodierern, entsprechend Fig. 2, d.h. er hat zwei Seiten, wobei Seite 1 UM = 0 und Seite 2 UM = 1 zugeordnet ist. Die Seiten können z.B. von verschiedenen Kodelisten gebildet sein.

Während also alle Bytes in Beispiel 1 und die meisten in Beispiel 2 laut Seite 1 (UM = 0) umkodiert werden, schaltet das Byte 6F in der durch *1* gekennzeichneten Zeile für den nächsten Befehl - gekennzeichnet durch *2* -dem Umkodierer 2 auf Seite 2 um. Das Byte 57 von Adresse 0005 wird also -entsprechend der andere Kodierungen enthaltenden Seite 2 -auf 47 umkodiert, während es sonst auf 3E bzw. 33 auf 47 umkodiert würde.

Der Umkodierer 2 wandelt somit die Daten 1 in die Daten 2 um, in Abhängigkeit von der Vorgeschichte der Daten (z.B. vorangehender Befehl, vorangehende Adresse, od.dgl.), welche Umkodierung unter Steuerung der Erkennungsschaltung 7 erfolgt.

Diese Abhängigkeit der Umkodierung von der Vorgeschichte bringt jedoch ein Problem mit sich: Es darf in dem Augenblick, in dem auf Umkodierer Seite 2 umgeschaltet ist, kein Interrupt angefordert werden, da das erste Befehlsbyte des Interrupt-Programms die Seite 1 voraussetzt und mit UM = 1 falsch übersetzt und daher auch falsch ausgeführt würde. Um dies zu verhindern, muß der Interrupt nach jedem Befehl, der die nachfolgende Entschlüsselung verändert, durch Hardware gesperrt werden. Diese Aufgabe übernimmt eine Sperre 3, die in der Interruptleitung IR angeordnet ist, und wenn UM = 1 ist, kein Interruptsignal zum Mikroprozessor durchläßt.

Die Schaltung in Fig. 5 ist eine Detailschaltung des vergossenen (mit den strichlierten Linien angedeuteten) Moduls gemäß Fig. 4

Über die Reset-Leitung R wird der Mikroprozessor in einen definierten Anfangszustand versetzt und gleichzeitig das D-Flip-Flop 7' und damit auch das Signal UM auf 0 gesetzt, womit auch die Umkodierer-Seite 1 gewählt wird.

Über den Adressbus gelangt die Adresse 0000 hinaus, am Datenbus kommt Byte 57, gelangt als Adresse (vergleichbar mit einer Zeilennummer in einem Nachschlagewerk) zum PROM, an dessen Ausgang das übersetzte Byte 3E erscheint. Es wird von dort einerseits zum Mikroprozessor übertragen und andererseits zum Eingang B des Vergleichers 7, der die dort anliegenden Werte mit dem Eingang A vergleicht, an dem die vorgegebenen, z.B. aufgelisteten Umschaltbefehle anliegen, und bei Gleichheit seinen Ausgang "A = B" auf 1 setzt - (Anfangswert 0).

Als nächstes wird die Adresse 0001 auf den Adressbus gelegt, am Datenbus erscheint 10 und wird vom PROM unverändert "durchgelassen", was dadurch möglich wird, daß der Mikroprozessor mit dem Signal auf der Leitung M1 alle Befehle und Daten unterscheidbar macht (Daten: M1 = 1 Befehle: M1 = 0).

Nun kommt die Adresse 0002, das Byte 33 wird übertragen und von PROM in 47 (LD B,A) übersetzt.

Im D-FF 7' wird bei jedem Befehl -gesteuert durch M1 ODER-verknüpft mit RD (Read) -der Zustand von A = B gespeichert, der dann auch dem Signal UM entspricht.

Gelangt das Byte 6F zum Vergleicher 7, wird A = B 1 (aufgrund der Übereinstimmung zwischen einlangenden und am Eingang A anliegenden Bytes) in das FF 7' übernommen und es wird UM = 1. Das Signal UM schaltet das PROM auf eine andere "Seite" bzw. "Liste" um und sperrt mit Hilfe der beiden ODER-Gatter 10, 11 die beiden - (Low-Aktiven) Interrupts INT und NMI.

Daten, die aus dem Mikroprozessor hinaus in den Speicher oder zur Peripherie kommen sollen, werden durch den (Tri-State-)Buffer 1, der der Leitung 1 entspricht, um das PROM herumgeleitet. Die Richtung des Datenflusses wird vom Mikroprozessor durch die Leitungen RD (Read) und WR (Write), die entweder PROM oder Buffer freigeben, gesteuert.

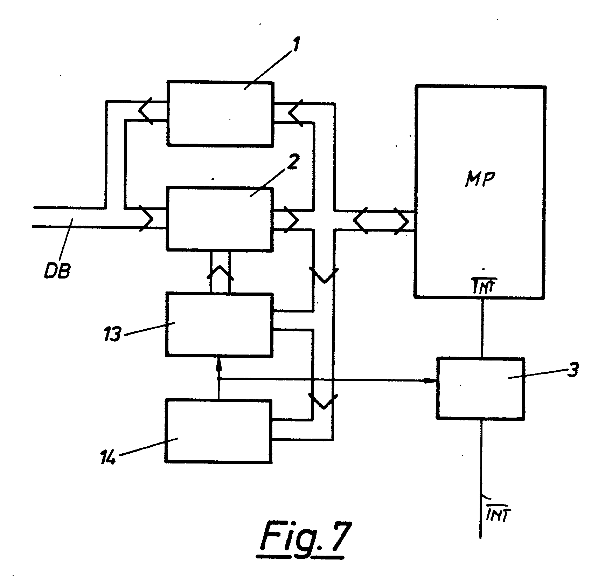

Die Schaltung nach Fig. 6 funktioniert ähnlich wie die nach Fig. 5. Das PAL, im vorliegenden Fall ein PAL2OR4, eine programmierbare Logikschaltung, enthält bestimmte D-Flip-Flops, UND-Gatter und ODER-Gatter, deren Verschaltung einmal gewählt und programmiert werden kann und dann hardwaremäßig festgelegt ist. In diesem Beispiel wird es so programmiert, daß es die Aufgabe der ODER-Gatter 10,11 des Vergleichers 7 und des D-FFs 7' übernimmt. Zu diesem Zweck werden die Leitungen M1, RD, INT, NMI und der Datenbus hingeführt. Heraus kommen die Leitungen INT', NMI' und eine Steuerleitung A7 für das PROM, mit der PROM-"Seiten" zur Abänderung der Kodierung in Abhängigkeit von einer bestimmten Vorgeschichte vertauscht werden können.

Der Buffer 1 hat die gleiche Funktion wie in Fig. 5.

Auf dem Weg zum Mikroprozessor werden vier Datenleitungen um das PROM herumgeführt, die anderen vier (D0 bis D3) werden umkodiert, und zwar in Abhängigkeit von den Datenleitungen D5 und D4, von der Adressleitung A0, (ähnlich wie in Fig. 3) und von der Steuerleitung A7 vom PAL, mit der auch dafür gesorgt wird, daß Daten nicht verändert werden und natürlich in Abhängigkeit von den Datenleitungen D0 bis D3 selbst.

Man kann also sagen, daß dieser Umkodierer 16 "Seiten" hat, nämlich $2^4$ Seiten, da die Datenleitungen D5 und D4, die Adressleitung A0 (Adresse eines Bytes gerade oder ungerade) und die Steuerleitung A7 jeweils zwei Zustände annehmen bzw. ausdrücken können. Bei Erkennen eines Umschaltbefehls werden für den nächsten Befehl - gesteuert durch das PAL bzw. durch in einem Speicher vorgesehene Befehle -die "Seiten" vertauscht, was zu anderen Übersetzungen führt. Siehe in den Programmbeispielen die zu Fig. 6 gehörige geänderte Kodierung des, dem Befehl LD, L,A(6F) folgenden Befehles LD B,A von Adresse 0005.

Eine weitere Möglichkeit, die "Vorgeschichte" für die Umkodierung wesentlich zu machen, zeigt die Schaltung in Fig. 7. Es sind hier nur noch die wesentlichen Details gezeichnet, die restliche Schaltung funktioniert analog den vorherigen Fig.

Die Befehlsbytes kommen zu einer Addierschaltung 12, wo sie zu dem Wert des vorher durchgeführten Befehls, der in einem Zwischenspeicher 13, abgelegt wurde, addiert werden. Die Summe kommt zum Mikroprozessor, wo der entsprechende Befehl ausgeführt wird, und außerdem in den Zwischenspeicher 13. Wenn das nächste Byte über den Datenbus kommt, wird im Addierer der Inhalt des Zwischenspeichers 13 dazugezählt, und das Ergebnis ist das richtige Befehlsbyte.

Anstelle einer Addition können Subtraktionen, Multiplikationen, Exclusiv-Oder-Verknüpfungen, usw. stattfinden. Der Zwischenspeicher besitzt für jedes Bit ein Flip-Flop.

Nach Programmverzweigungen, z.B. Sprungbefehlen, muß der Zwichenspeicher 13 auf 0 gesetzt werden, da die Sprungziele von verschiedenen Stellen mit verschiedenen Befehlen erreicht werden können und dort trotzdem eine definierte Umkodierung stattfinden muß. Zu diesem Zweck dient der Vergleicher 14, der die Programmverzweigungsbefehle bzw. Sprungbefehle erkennt, danach den Zwischenspeichen auf 0 setzt und auch die Interrupt-Sperre freigibt.

Es könnten beliebige Beispiele erstellt werden; das Prinzip einiger Beispiele soll aber noch kurz erwähnt werden:

▀ Invertieren des nächsten Daten-und/oder Befehlsbytes nach bestimmten, bereits eingelangten Bytes

▀ Exclusiv-Oder-Verknüpfen des zuletzt durchgeführten Befehls mit dem neuen Byte (wie Fig. 7 mit EOR-Verknüpfung statt Add.)

▀ Vertauschen bestimmter Datenbus-Bits in Abhängigkeit von der Summe der durchgeführten Befehle.

Zusätzlich zu den bis jetzt aufgezählten Umkodierer-Verfahren kann man auch die aufgezählten Methoden gemeinsam, beliebig kombiniert, verwenden.

Allen gemeinsam ist jedoch das Vorhandensein von mindestens einem Flip-Flip, dessen Zustand von einem oder mehreren, vorher durchgeführten Befehl(en) abhängt und das auf den Umkodierer Einfluß hat, und so die Art der Umkodierung von der Vorgeschichte abhängig macht.

## Programmbeispiele

| Adresse | Befehl | Kode für Schaltung laut | | | | | |
|---|---|---|---|---|---|---|---|
| | | Bild 1 | Bild 2 | Bild 3 | Bild 4+5 | Bild 6 | Bild 7 |
| 0000 | LD A,10 | 3E 10 | 57 10 | 57 10 | 57 10 | 37 10 | 3E 10 |
| 0002 | LD B,A | 47 | 33 | 33 | 33 | 41 | 09 |
| 0003 | LD B,A | 47 | 33 | 12 | 33 | 43 | 00 |
| 0004 | LD B,A | 47 | 33 | 98 | 33 | 4F | 00 |
| 0005 | LD B,A | 47 | 33 | 12 | 33 | 43 | 00 |
| 0006 | LD B,A | 47 | 33 | 33 | 33 | 41 | 00 |
| 0007 | LD B,A | 47 | 33 | 12 | 33 | 43 | 00 |
| 0008 | LD B,A | 47 | 33 | 98 | 33 | 4F | 00 |
| 0009 | " | " | " | " | " | " | " |
| 000A | " | " | " | " | " | " | " |
| 000B | " | " | " | " | " | " | " |

| Adresse | Befehl | Kode Schaltung laut | | | | | | |
|---|---|---|---|---|---|---|---|---|
| | | Bild 1 | Bild 2 | Bild 3 | Bild 4-5 | Bild 6 | Bild 7 | |
| 0000 | LD A,10 | 3E 10 | 57 10 | 57 10 | 57 10 | 37 10 | 3E 10 | |
| 0002 | LD B,A | 47 | 33 | 33 | 33 | 41 | 09 | |
| 0003 | LD B,A | 47 | 33 | 12 | 33 | 43 | 00 | |
| 0004 | LD L,A | 6F | 72 | 86 | 72 | 62 · | 00 | *1* |
| 0005 | LD B,A | 47 | 33 | 12 | 57 | 48 | 00 | *2* |
| 0006 | LD B,A | 47 | 33 | 33 | 33 | 41 | 00 | |
| 0007 | LD B,A | 47 | 33 | 12 | 33 | 43 | 00 | |
| 0008 | LD B,A | 47 | 33 | 98 | 33 | 4F | 00 | |
| 0009 | " | " | " | " | " | " | " | |
| 000A | " | " | " | " | " | " | " | |
| 000B | " | " | " | " | " | " | " | |

## Ansprüche

1. Verfahren zum Schutz von in zumindest einen Befehls-und/oder Datenspeicher abgelegter Software gegen unbefugtes Kopieren, wobei die Befehle und/oder Daten einem Mikroprozessor auf Abfrage zugeleitet werden und hiebei umkodiert werden, wobei zumindest ein Teil der dem(n) Speicher(n) entnommenen Befehle und/oder Daten, vorzugsweise alle Befehle, durch vorgegebene neue Befehle und/oder Daten ersetzt bzw. in diese umgewandelt werden, die sodann als neue, gültige Befehle und/oder Daten dem Mikroprozessor zugeführt werden, dadurch gekennzeichnet, daß die Art der Umkodierung von zumindest einem abgefragten Befehls-und/oder Datenbyte in Abhängigkeit von zumindest einem vorangehend abgefragten Befehls-und/oder Datenbyte abgeändert wird.

2. Anordnung zum Schutz von in zumindest einem Befehls-und/oder Datenspeicher abgelegter Software gegen unbefugtes Kopieren, wobei die Befehle und/oder Daten einem Mikroprozessor auf Abfrage über einen gegebenenfalls mit diesem hybridisierten bzw. vergossenen Umkodierer zur Verarbeitung zugeleitet sind, und wobei im Umkodierer zumindest ein Teil der dem(n) Speicher(n) entnommenen Befehle und/oder Daten, vorzugsweise alle Befehle, durch vorgegebene neue Befehle und/oder Daten ersetzt bzw. in diese umgewandelt werden, die sodann als neue, gültige Befehle und/oder Daten dem Mikroprozessor zugeführt sind, insbesondere zur Durchführung des Verfahrens nach Anspruch 1, dadurch gekennzeichnet, daß die Umkodierungsfunktion des Umkodierers für zumindest ein zumindest einem eingetroffenen, in vorgesehener Art umkodierten, Befehls-und/oder Datenbyte nachfolgendes Befehls-und/oder Datenbyte abänderbar ist.

3. Anordnung nach Anspruch 2, dadurch gekennzeichnet, daß der Umkodierer eine Erkennungs-bzw. Umwandlungsschaltung für die einlangenden Befehle und/oder Daten aufweist, mit der der Umkodierer bei Übereinstimmung zumindest eines eingelangten Befehls-und/oder Datenbytes mit zumindest einem in der Erkennungsschaltung enthaltenen vorgegebenen Befehls-und/oder Datenbyte zur Abänderung der Umkodierung einer bestimmten Anzahl nachfolgend einlangender Befehle und/oder Daten, z.B. Ersetzen der Befehle und/oder Daten durch andere Befehls-und/oder Datenbytes, umschaltbar ist, z.B. durch Änderung des Zugriffes auf einen anderen, dem Umkodierer zugeordneten bzw. in ihm enthaltenen Befehls-und/oder Datenspeicher, durch Umformen, z.B. Summieren, der einlangenden Befehle und/oder Daten in vorbestimmter Weise od.dgl.

4. Anordnung nach Anspruch 3, dadurch gekennzeichnet, daß die z.B. von einem Vergleicher gebildete Erkennungsschaltung zur Umstellung des Umkodierers auf die abgeänderte Art der Umkodierung, z.B. durch Heranziehung einer anderen Seite bzw. anderen Kodierungsliste, bei Erkennung eines, eine Abänderung bedingenden Befehls-und/oder Datenbytes, ein Flip-Flop ansteuert, das den Umkodierer umstellt, wobei gegebenenfalls die Art der Abänderung in einem, dem Umkodierer zugeordneten Speicher enthalten ist.

5. Anordnung nach einem der Ansprüche 2 bis 4, dadurch gekennzeichnet, daß der Befehls-bzw. Datenbus für Befehle und/oder Daten vom Mikroprozessor zur Peripherie bzw. zu dem(n) Speicher-(n) um den Umkodierer, z.B. über einen Buffer herumgeführt bzw. antiparallel zum Umkodierer geschaltet ist.

6. Anordnung nach einem der Ansprüche 2 bis 5, dadurch gekennzeichnet, daß bei Erkennung eines eingelangten Befehls-und/oder Datenbytes als Änderungsbefehl für eine Abänderung der Umkodierung, der Umkodierer zur Abänderung der Umkodierung des zumindest nächsten einlangenden Befehls-und/oder Datenbytes in Abhängigkeit vom Zustand der auf zumindest einer Adressleitung und/oder zumindest einer Datenleitung einlangenden Bits umschaltbar ist.

7. Anordnung nach einem der Ansprüche 2 bis 6, dadurch gekennzeichnet, daß in dem(n) Interrupteingang(gängen) des Mikroprozessors eine Sperre vorgesehen ist, die bei Eintreffen eines, eine Abänderung der Befehls-und/oder Daten-Umkodierung im Umkodierer bewirkenden Befehls-und/oder Datenbytes bzw. in Abhängigkeit vom Ausgangssignal des Flip-Flops bzw. des Ausgangssignals der Erkennungsschaltung den (die) Interrupteingang(gänge) für dei Zeitdauer der vorgesehenen Abänderung sperrt.

8. Anordnung nach Anspruch 2, dadurch gekennzeichnet, daß eine Verknüpfungseinrichtung zur direkten Verknüpfung von eingelangten Befehls-und/oder Datenbytes mit einlangenden Befehls-und/oder Datenbytes zur Abänderung der eingelangten Befehls-und/oder Datenbytes, z.B. durch bit-oder byteweise Addition, Subtraktion, Exclusiv-Oder-Verknüpfung, od. dgl., vorgesehen ist.

9. Anordnung nach Anspruch 8, dadurch gekennzeichnet, daß der Verknüpfungseinrichtung, z.B. einem Addierer, ein Zwischenspeicher, der gegebenenfalls für jedes zu speichernde Bit ein Flip-Flop aufweist, zugeordnet ist, in welcher Verknüpfungseinrichtung jedes einlangende Befehls- und/oder Datenbyte oder zumindest ein dem Einlangen eines, eine Änderung der Umkodierung bedingenden Befehls-und/oder Datenbytes folgendes Befehls-und/oder Datenbyte mit zumindest einem, insbesondere dem jeweils folgenden Befehls-und/oder Datenbyte, verknüpfbar, insbesondere summierbar ist und die verknüpften Befehle und/oder Daten, z.B. die Bit-Summe, als neues, richtiges Befehls-und/oder Datenbyte dem Mikroprozessor zugeführt sind.

10. Anordnung nach Anspruch 8 oder 9, dadurch gekennzeichnet, daß ein Vergleicher für Befehls-und/oder Datenbytes mit abgeänderter Kodierung vorgesehen ist, der bei Feststellung einer Programmverzweigung und/oder anderen bestimmten vorgegebenen Befehlen und/oder Daten den Zwischenspeicher löscht bzw. auf RESET stellt.

11. Anordnung nach einem der Ansprüche 8 bis 10, dadurch gekennzeichnet, daß in dem(n) Interrupteingang (gängen) des Mikroprozessors eine Sperre vorgesehen ist, die z.B. bei Programmverzweigungsbefehlen oder bei eigenen, hierfür vorgesehenen Befehlen, aufhebbar ist.

*Fig.1*

*Fig.2*

Fig.5

Fig.7